# EUROPEAN PATENT APPLICATION

(11) **EP 4 152 127 A1**
(43) Date of publication of application: **22.03.2023**
(21) Application number: 22189608.7
(22) Date of filing: 09.08.2022
(51) Int. Cl.: G06F 3/0354, G06F 3/041, G06F 3/0488

(54) **INFORMATION PROCESSING DEVICE AND CONTROL METHOD**

(30) Priority: 17.09.2021 JP 2021152078
(71) Applicant: Lenovo (Singapore) Pte. Ltd., New Tech Park 556741 (SG)
(72) Inventor: NOMURA, Ryohta, Kanagawa (JP); YAO, Qiang, Kanagawa (JP)
(74) Representative: Openshaw & Co.

(57) **Abstract**

To change the screen display orientation so that the user can view the display correctly when the user places the display screen horizontally for use, an information processing device includes: a display; a touch sensor which detects a contact position of a pen on the screen of the display; an angle detection unit which detects a pen angle, which is the angle of the pen when the pen comes in contact with the screen; and a display control unit which changes screen display orientation of the display according to the pen angle detected by the angle detection unit.

## Description

### Field of the Invention

The present invention relates to an information processing device and a control method.

### Background of the Invention

Some of recent information processing devices such as tablet terminals have a function of rotating the screen display orientation of the display according to the posture of the chassis including the display (see for example, Japanese Unexamined Patent Application Publication No. 2008-131616 and Japanese Unexamined Patent Application Publication No. 2013-150129). When a user holds an information processing device of this type with their hand during use, for example, the screen display orientation of the display rotates in accordance with the posture of the chassis. This allows the user to view the display in the correct orientation.

Recently, some information processing devices such as tablet terminals having a pen-drawing function have been commercially available. One of the functions of these information processing devices is that when the device is in the sleep mode, touching the screen with a pen automatically starts a memo application. Such a function saves the trouble of operating the memo application, and so is a convenient function when the user wants to take notes instantly.

### Summary of the Invention

If the display screen is placed on a desk to be horizontal, for example, the above-mentioned information processing devices may fail to change the screen display orientation so that the user can view the display correctly.

For example, when the user wants to use the instant start function of memo application as stated above, conventional methods do not know the orientation of the information processing device when the device is placed horizontally. This causes the device to provide the memo application screen in an orientation different from the user's expectation. This can cause a problem that the device saves the drawn memo in the direction different from the user's expectation.

In order to solve the above problem, the present invention aims to provide an information processing device and a control method capable of automatically changing the screen display orientation so that the user can view the display correctly when the user places the display screen horizontally for use.

To solve the above problems, the first aspect of the present invention relates to an information processing device including: a display with a screen; a touch sensor which detects a contact position of a pen on the screen of the display; an angle detection unit which detects a pen angle, which is the angle of the pen when the pen comes in contact with the screen; and a display control unit which changes screen display orientation of the display according to the pen angle detected by the angle detection unit.

In the information processing device according to one aspect of the present invention, the pen angle may include an azimuth angle on the screen, and the display control unit may change the screen display orientation of the display according to which of four divided angular sections of the entire angle range the azimuth angle falls within.

The information processing device according to one aspect of the present invention may further include an input control unit which outputs information for setting the screen display orientation based on the pen angle detected by the angle detection unit, the information being in the form a keycode, and the display control unit changes the screen display orientation of the display based on the information for setting the screen display orientation that the input control unit outputs.

In the information processing device according to one aspect of the present invention, the pen angle may include a tilt angle of the pen relative to a direction perpendicular to the screen of the display, when the tilt angle is smaller than a predetermined threshold, the input control unit may output information in the form of a keycode, indicating that the azimuth angle is unknown, and when acquiring information from the input control unit, indicating that the azimuth angle is unknown, the display control unit may not change the screen display orientation of the display.

The information processing device according to one aspect of the present invention may further include a dominant-hand information storage unit that stores dominant-hand information indicating a dominant hand of a user, wherein the display control unit may change the screen display orientation of the display according to the angular section that is corrected based on the dominant-hand information stored in the dominant-hand information storage unit.

The information processing device according to one aspect of the present invention may further include a startup control unit which starts a predetermined application program in response to detection by the touch sensor of a contact of the pen with the screen in a display state indicating a standby state, wherein when the startup control unit starts the predetermined application program from a display state where the screen of the display is in the standby state, the display control unit may change the screen display orientation of the display according to the pen angle.

In the information processing device according to one aspect of the present invention, the predetermined application program may be an instant memo program that initiates a memo function to display a movement locus of a contact position of the pen on the screen upon the contact of the pen with the screen from the display state where the screen of the display is in the standby state.

In the information processing device according to one aspect of the present invention, the display control unit may change the screen display orientation of the display according to the pen angle while a predetermined application program is running.

The second aspect of the present invention relates to an information processing device including: a display with a screen; a touch sensor which detects a contact position of a pen on the screen of the display; an angle detection unit which detects a pen angle, which is the angle of the pen when the pen comes in contact with the screen; a memory that temporarily stores a program; and a processor which executes the program stored in the memory, the processor being which executes a display control process to change screen display orientation of the display according to the pen angle detected by the angle detection unit.

The third aspect of the present invention relates to a method for controlling an information processing device including a display with a screen, and a touch sensor which detects a contact position of a pen on the screen of the display, the method including the steps of: an angle detection step where an angle detection unit detects a pen angle, which is the angle of the pen when the pen comes in contact with the screen; and a display control step where a display control unit changes screen display orientation of the display according to the pen angle detected at the angle detection step.

The above aspects of the present invention change the screen display orientation so that the user can view the display correctly when the user places the display screen horizontally for use.

### Brief Description of the Drawings

FIG. 1 illustrates the appearance of one example of a tablet terminal according to a first embodiment.
FIG. 2 illustrates one example of the major hardware configuration of the tablet terminal according to the first embodiment.
FIG. 3 is a block diagram illustrating one example of the functional configuration of the tablet terminal according to the first embodiment.
FIG. 4 describes one example of the pen angle in the first embodiment.
FIG. 5 illustrates an example of the relationship between the pen angular sections and the screen display orientations for right-handed users in the first embodiment.
FIG. 6A illustrates a first tilt angle in the first embodiment.
FIG. 6B illustrates a second tilt angle in the first embodiment.
FIG. 7 indicates an example of the angular sections of pen angles and custom keycodes to be output in the first embodiment.
FIG. 8 illustrates an example of the relationship between the pen angular sections and the screen display orientations for left-handed users in the first embodiment.
FIG. 9 is a flowchart describing an example of the process of changing the screen display orientation of the tablet terminal according to the first embodiment.
FIG. 10 is a flowchart describing an example of the conversion process of a pen angle of the tablet terminal to a custom keycode according to the first embodiment.
FIG. 11 is a flowchart describing an example of the process of changing the screen display orientation of the tablet terminal according to a second embodiment.

### Detailed Description of the Invention

Referring to the drawings, the following describes an information processing device and a control method according to one embodiment of the present invention.

### [First Embodiment]

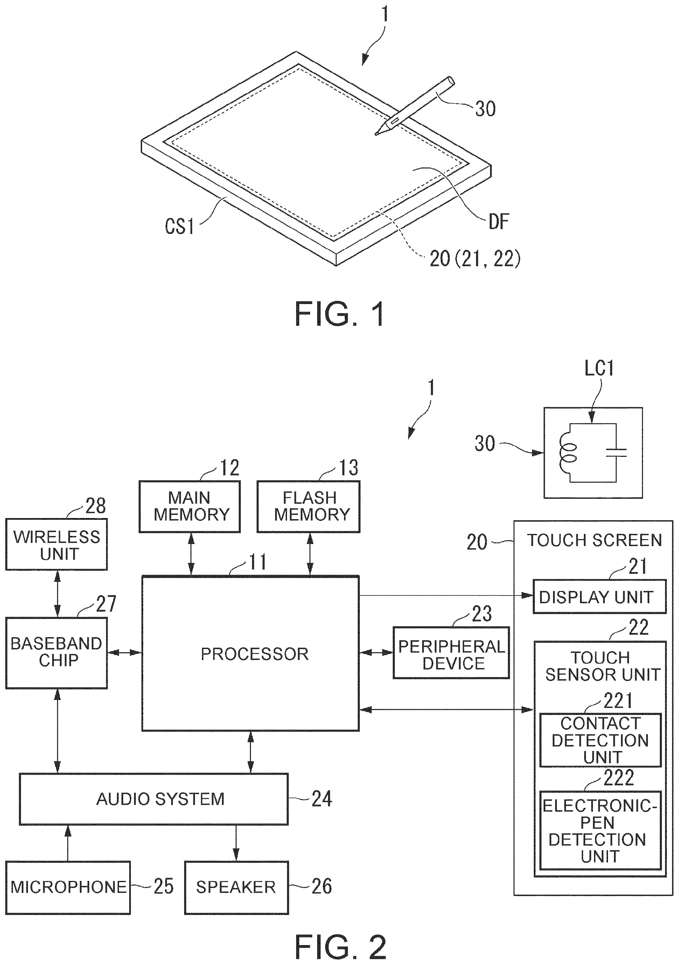

FIG. 1 illustrates the appearance of one example of a tablet terminal 1 according to the present embodiment. The following describes the present embodiment by way of the tablet terminal 1 that is one example of the information processing device.

As illustrated in FIG. 1, the tablet terminal 1 includes a touch screen 20 on one principal surface of the chassis CS1, on which the user uses an electronic pen 30 to execute an application program such as Notepad.

The touch screen 20 includes a display unit 21 and a touch sensor unit 22. The display unit 21 displays various information on the display screen DF.

The touch sensor unit 22 is placed to overlap the display unit 21, and detects a contact of the electronic pen 30 with the display screen DF of the display unit 21 and also detects the contact position of the electronic pen 30. The touch sensor unit 22 also detects the pen angle, which indicates the angle of the electronic pen 30 when it comes in contact with the display screen DF.

Details of the touch screen 20, display unit 21, and touch sensor unit 22 are described later.

Referring next to FIG. 2, the major hardware configuration of the tablet terminal 1 is described.

FIG. 2 illustrates one example of the major hardware configuration of the tablet terminal 1 according to the present embodiment.

As illustrated in FIG. 2, the tablet terminal 1 includes a processor 11, a main memory 12, a flash memory 13, the touch screen 20, a peripheral device 23, an audio system 24, a microphone 25, a speaker 26, a baseband chip 27, and a wireless unit 28.

In one example, the processor 11 is an application processor including a central processing unit (CPU) 11. The processor 11 controls the tablet terminal 1 as a whole.

The main memory 12 is a writable memory functioning as a read-in area of a program executed by the processor 11 or a work area to write the data processed by the executed program. In one example, the main memory 12 includes a plurality of dynamic random access memory (DRAM) chips. The program executed includes an OS (Operating System), various types of drivers to operate peripherals that are hardware, various types of service/utility, and application programs (application software).

In one example, the flash memory 13 is a flash electrically erasable programmable read only memory (EEPROM), and stores the OS, various types of drivers, various types of services/utilities, application programs (hereinafter they may be referred to as applications), and various types of data.

In one example, the display unit 21 is a liquid crystal display or an organic electro-luminescence (EL) display, and displays information on the screen based on the drawing data (display data) output from the processor 11.

The touch sensor unit 22 detects the position of the operating medium that is the electronic pen 30 on the screen of the display unit 21, a contact of the electronic pen 30 with the screen, and the pen angle. In one example, the touch sensor unit 22 detects the approach of the electronic pen 30 within a predetermined distance from the screen of the display unit 21 using the resonance circuit LC1 that the electronic pen 30 has, and thus detects the position of the electronic pen 30 above the screen without contact. The touch sensor unit 22 also detects the pen angle, which indicates the angle of the pen, using the resonance circuit LC1 of the electronic pen 30.

The touch sensor unit 22 includes a contact detection unit 221 and an electronic-pen detection unit 222.

In one example, the contact detection unit 221 is a capacitive touch sensor, which detects the electronic pen 30 in contact with the screen of the display unit 21, as well as the position where the electronic pen is in contact.

In one example, the electronic-pen detection unit 222 is an electromagnetic induction type touch sensor, which uses the resonant circuit LC1 of the electronic pen 30 to detect the position of the electronic pen 30 above the screen of the display unit 21 in a non-contact manner. In one example, the electronic-pen detection unit 222 detects the pen angle when the electronic pen 30 comes in contact with the display screen DF of the display unit 21. The details of the pen angle are described later.

In one example, the peripheral device 23 includes a wireless local area network (WLAN) module, a Bluetooth (registered trademark) module, a global positioning system (GPS) module, and sensors such as an acceleration sensor.

In one example, the audio system 24 is an audio integrated circuit (IC), and inputs, records, reproduces, and outputs sound data. In one example, the audio system 24 is connected to the microphone 25 and the speaker 26. In one example, the audio system 24 outputs the sound data collected by the microphone 25 to the processor 11 or the baseband chip 27. In one example, the audio system 24 converts sound data acquired from the processor 11 or the baseband chip 27 into sound signals and outputs them to the speaker 26.

The microphone 25 collects the sound around the tablet terminal 1. In one example, the microphone 25 collects sound such as user's voice when making a voice call with another terminal.

The speaker 26 outputs various sounds to the outside of the tablet terminal 1. In one example, the speaker 26 outputs (emits) the sound received from another terminal when making a voice call with that terminal.

In one example, the baseband chip 27 is a dedicated IC that controls wireless communications such as 4G (4th generation mobile communication system) and 5G (5th generation mobile communication system). In one example, the baseband chip 27 causes voice data received with the wireless unit 28 to be output to the speaker 26 via the audio system 24. In one example, the baseband chip 27 acquires sound data collected from the microphone 25 via the audio system 24 and outputs the sound data using the wireless unit 28 via a mobile communication system. The baseband chip 27 also exchanges the input/output data of data communications via the mobile communication system with the processor 11.

The wireless unit 28 is a wireless communication device, including an antenna, for a wireless communication via the mobile communication system.

The electronic pen 30 is a pen-shaped operating medium, such as a touch pen or a stylus pen. The electronic pen 30 includes the resonant circuit LC1. The electronic pen 30 is powered by electromagnetic induction to the coil of the resonant circuit LC1, and is configured so that the position and angle of the electronic pen 30 on the screen of the display unit 21 can be detected using this resonant circuit.

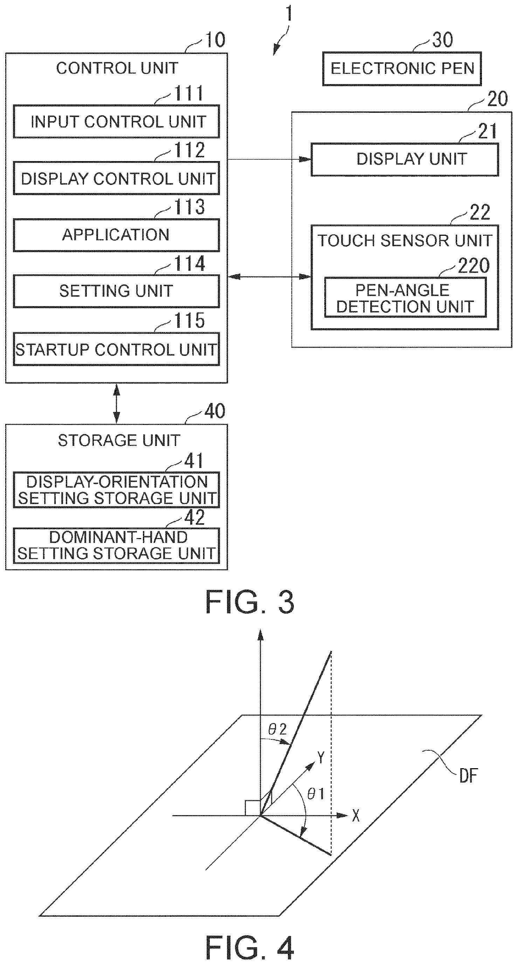

Referring next to FIG. 3, the functional configuration of the tablet terminal 1 according to the present embodiment is described.

FIG. 3 is a block diagram illustrating one example of the functional configuration of the tablet terminal 1 according to the present embodiment.

As illustrated in FIG. 3, the tablet terminal 1 includes a control unit 10, the touch screen 20, the electronic pen 30, and a storage unit 40.

The touch screen 20 includes the display unit 21 and the touch sensor unit 22.

The touch sensor unit 22 includes a pen-angle detection unit 220.

In one example, the pen-angle detection unit 220 (one example of an angle detection unit) is implemented with the electronic-pen detection unit 222, and detects the pen angle, which is the angle of the pen coming in contact with the screen, using the resonant circuit LC1 of the electronic pen and the electromagnetic induction function of the electronic-pen detection unit 222. The pen angle is described with reference to FIG. 4.

FIG. 4 describes one example of the pen angle in the present embodiment.

As illustrated in FIG. 4, the pen angle detected by the pen-angle detection unit 220 includes an azimuth angle θ1 and a tilt angle θ2.

Let that the short-side direction of the display screen DF of the tablet terminal 1 is X direction and the long-side direction is Y direction. Then, the azimuth angle θ1 indicates the angle of the electronic pen 30 on the XY plane relative to the reference azimuth direction (e.g., Y direction).

The tilt angle θ2 indicates the tilt angle of the electronic pen 30 relative to the direction perpendicular to the display screen DF of the display unit 21 (e.g., Z direction).

The pen-angle detection unit 220 detects the pen angles including the azimuth angle θ1 and tilt angle θ2 as illustrated in FIG. 4 and outputs them to the control unit 10.

Referring back to FIG. 3, the storage unit 40 is implemented with the main memory 12 or the flash memory 13, for example, and includes a display-orientation setting storage unit 41 and a dominant-hand setting storage unit 42.

The display-orientation setting storage unit 41 is implemented with the main memory 12 or the flash memory 13, for example, and stores setting information on the screen display orientation of the display unit 21. Setting information on the screen display orientation has four different orientations, the details of which are described later.

The dominant-hand setting storage unit 42 (one example of a dominant-hand information storage unit) is implemented with the main memory 12 or the flash memory 13, for example, and stores dominant-hand information indicating the user's dominant hand holding the electronic pen 30. The dominant-hand information indicates right-handedness or left-handedness, and the dominant-hand setting storage unit 42 stores the setting information (dominant-hand information) indicating right-handedness or left-handedness.

In one example, the control unit 10 is a functional unit implemented by the processor 11 executing a program stored in the main memory 12 or the flash memory 13, and executes various processes based on the OS (e.g., Android (registered trademark)). The control unit 10 includes an input control unit 111, a display control unit 112, an application 113, a setting unit 114, and a startup control unit 115.

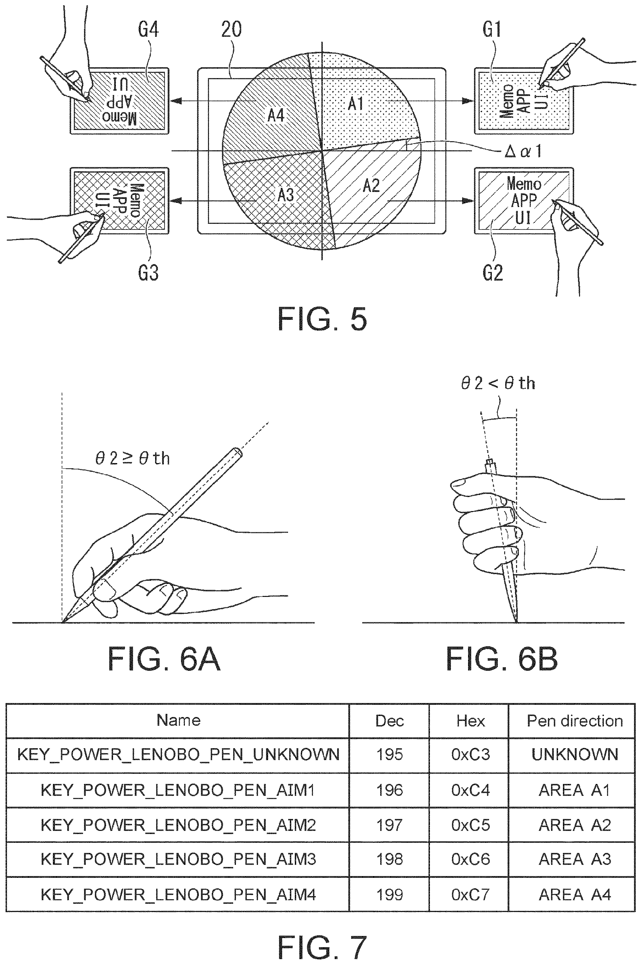

The input control unit 111 is a functional unit implemented by the processor 11. In one example, the input control unit 111 is a device driver that controls the input by the touch sensor unit 22, and detects the position and a contact of the operating medium on the screen of the display unit 21 based on the input of the touch sensor unit 22. The input control unit 111 also acquires the pen angle detected by the pen-angle detection unit 220, converts the pen angle into a custom keycode, and outputs it to the OS. Referring now to FIGS. 5 to 7, the relationship between the pen angles and the custom keycodes is described.

FIG. 5 illustrates an example of the relationship between the pen angular sections and the screen display orientations for right-handed users in the present embodiment.

As illustrated in FIG. 5, the input control unit 111 divides the entire angle range for azimuth angle θ1 of the pen angle into four divided angular sections (areas A1 to A4), and converts the pen angle into a custom keycode that corresponds to its angular section of the azimuth angle θ1. In this case, area A1 of the angular section corresponds to the orientation of display screen G1, and area A2 of the angular section corresponds to the orientation of display screen G2. Area A3 of the angular section corresponds to the orientation of display screen G3, and area A4 of the angular section corresponds to the orientation of display screen G4.

The input control unit 111 corrects these angular sections (areas A1 to A4) according to whether the user is right-handed or left-handed. For example, FIG. 5 illustrates the example in which the user is right-handed. In this case, the angular sections are corrected by rotating them counterclockwise by angle Δα1. In one example, the input control unit 111 corrects the angular sections based on the dominant-hand information stored in the dominant-hand setting storage unit 42.

If the tilt angle θ2 is smaller than a predetermined threshold θth, the input control unit 111 outputs information in the form of a custom keycode, indicating that the azimuth angle θ1 is unknown.

FIG. 6A and FIG. 6B illustrate a difference in the tilt angle θ2 in the present embodiment.

FIG. 6A illustrates the example where the tilt angle θ2 is equal to or greater than the threshold θth. The input control unit 111 then outputs a custom keycode corresponding to the above-mentioned angular sections (areas A1 to A4).

FIG. 6B illustrates the example where the tilt angle θ2 is smaller than the threshold θth. The input control unit 111 therefore outputs a custom keycode indicating the azimuth angle θ1 is unknown.

FIG. 7 describes an example of the range of pen angles (angular sections) and custom keycodes to be output in the present embodiment.

As described in FIG. 7, the input control unit 111 outputs a custom code according to the pen angle.

For example, FIG. 7 indicates the example, in which, when the tilt angle θ2 is smaller than the threshold θth, the input control unit 111 sets "unknown", and outputs custom keycodes of "195" in decimal and "OxC3" in hexadecimal.

When the tilt angle θ2 is equal to or greater than the threshold θth and the azimuth angle θ1 is within the angular section of area A1, the input control unit 111 sets "area A1" and outputs custom keycodes of "196" in decimal and "0xC4" in hexadecimal.

When the tilt angle θ2 is equal to or greater than the threshold θth and the azimuth angle θ1 is within the angular section of area A2, the input control unit 111 sets "area A2" and outputs custom keycodes of "197" in decimal and "0xC5" in hexadecimal.

When the tilt angle θ2 is equal to or greater than the threshold θth and the azimuth angle θ1 is within the angular section of area A3, the input control unit 111 sets "area A3" and outputs custom keycodes of "198" in decimal and "0xC6" in hexadecimal.

When the tilt angle θ2 is equal to or greater than the threshold θth and the azimuth angle θ1 is within the angular section of area A4, the input control unit 111 sets "area A4" and outputs custom keycodes of "199" in decimal and "0xC7" in hexadecimal.

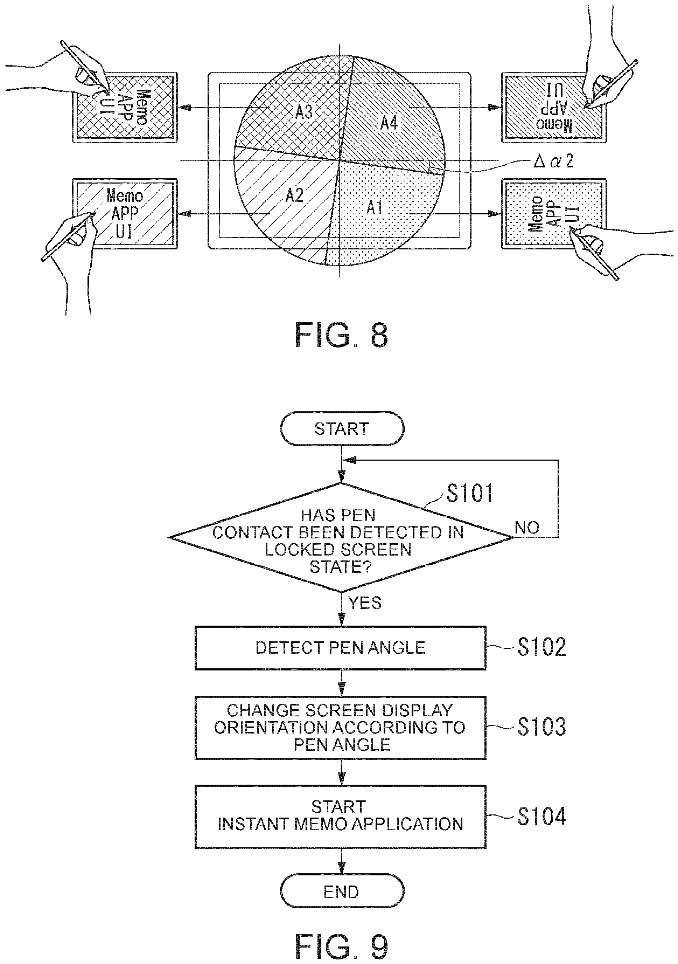

FIG. 8 illustrates an example of the relationship between the pen angular sections and the screen display orientations for left-handed users in the present embodiment.

As illustrated in FIG. 8, when the user is left-handed, the input control unit 111 corrects the angular sections (areas A1 to A4) by rotating them clockwise by angle Δα1.

Referring back again to FIG. 3, the display control unit 112 is a functional unit implemented by the processor 11. The display control unit 112 changes the screen display orientation of the display unit 21 according to the pen angle detected by the pen-angle detection unit 220. In one example, the display control unit 112 changes the screen display orientation of the display unit 21 according to which of the angular sections (areas A1 to A4), which are four divided sections of the entire angle range, the azimuth angle θ1 falls within.

Specifically, the display control unit 112 changes the screen display orientation of the display unit 21 based on the custom keycode, which is information for setting the screen display orientation, output from the input control unit 111. That is, the display control unit 112 causes the display-orientation setting storage unit 41 to store setting information on the screen display orientation corresponding to the angular section (area A1 to area A4) indicated by the custom keycode. The display control unit 112 changes the screen display orientation based on the setting information on the screen display orientation stored in the display-orientation setting storage unit 41 for displaying on the display unit 21.

When acquiring information indicating that the azimuth angle is unknown (e.g., custom keycode "0xC3") from the input control unit 111, the display control unit 112 does not change the screen display orientation of the display unit 21.

The display control unit 112 also outputs a custom keycode corresponding to the angular section that is corrected by the input control unit 111 according to the dominant-hand information. That is, the display control unit 112 changes the screen display orientation of the display unit 21 according to the angular section corrected based on the dominant-hand information stored in the dominant-hand setting storage unit 42.

The application 113 is a functional unit implemented by the processor 11, and executes a predetermined process by running a predetermined application program, for example. In one example, the predetermined application program is an instant memo program that initiates a memo function to display the movement locus of the contact position with the electronic pen 30 on the screen upon the contact of the electronic pen 30 with the screen from the display state (locked screen state) where the display screen of the display unit 21 is in the standby state.

The setting unit 114 is a functional unit implemented by the processor 11, and stores dominant-hand information in the dominant-hand setting storage unit 42. In one example, the dominant-hand information indicates whether the user is right-handed or left-handed according to the operation of the user, and the setting unit 114 stores this information in the dominant-hand setting storage unit 42. In one example, the setting unit 114 may obtain the dominant-hand information indicating whether the user is right-handed or left-handed according to the user's habit of using the electronic pen 30 through observation of the operating state of the electronic pen 30 with the touch sensor unit 22 during normal use, and then automatically store the dominant-hand information in the dominant-hand setting storage unit 42. In one example, the setting unit 114 may change the set value of the angle Δα1 for correcting the angular section according to the user's habit of using the electronic pen, in addition to the user's dominant hand. In this case, the input control unit 111 corrects the angular sections (areas A1 to A4) according to the user's dominant hand and the habit of use.

The startup control unit 115 is a functional unit implemented by processor 11, and starts a predetermined application program (e.g., an instant memo program) when the touch sensor unit 22 detects a contact of the electronic pen 30 on the screen in the display state (locked screen state) where the display screen of display unit 21 is in the standby state.

In this case, when the startup control unit 115 starts a predetermined application (e.g., an instant memo program) from the display state (locked screen state) where the display screen of display unit 21 is in the standby state, the display control unit 112 changes the screen display orientation of the display unit 21 according to the pen angle.

In one example, the display control unit 112 may change the screen display orientation of the display unit 21 according to the pen angle while a predetermined application program is running.

Next, the following describes the operation of the tablet terminal 1 according to the present embodiment, with reference to the drawing.

FIG. 9 is a flowchart describing an example of the process of changing the screen display orientation of the tablet terminal 1 according to the present embodiment.

As described in FIG. 9, the tablet terminal 1 first determines whether or not a pen contact has been detected in the locked screen state (step S101). The startup control unit 115 of the tablet terminal 1 determines whether the electronic pen 30 comes in contact with the display screen DF in the locked screen state of the display unit 21 based on the detection of the contact of the electronic pen 30 with the display screen DF by the touch sensor unit 22. When the electronic pen 30 comes in contact with the display screen DF on the locked screen state (step S101: YES), the startup control unit 115 advances the process to step S102. When the electronic pen 30 does not come in contact with the display screen DF on the locked screen state (step S101: NO), the startup control unit 115 returns the process to step S101.

In step S102, the pen-angle detection unit 220 of the touch sensor unit 22 detects the pen angle. The pen-angle detection unit 220 detects the pen angle (azimuth angle θ1 and tilt angle θ2) of the electronic pen 30 in contact with the display screen DF using electromagnetic induction with the resonant circuit LC1 of the electronic pen 30.

Next, the display control unit 112 changes the screen display orientation according to the pen angle (step S103). In this step, the input control unit 111 acquires the pen angle (azimuth angle θ1 and tilt angle θ2) detected by the pen-angle detection unit 220 first, and changes it into a custom keycode according to which of the angular sections (area A1 to area A4) the azimuth angle θ1 falls within. The display control unit 112 changes the screen display orientation based on the custom keycode corresponding to the angular section output from the input control unit 111 (see, for example, FIG. 7).

The display control unit 112 changes the setting information on the screen display orientation in the display-orientation setting storage unit 41, and changes the screen display orientation as illustrated in FIG. 5, for example, based on the setting information on the screen display orientation.

Next, the startup control unit 115 starts the instant memo application (step S104). Specifically, the startup control unit 115 changes the screen display orientation, starts the instant memo application (e.g., application 113) and displays it on the display screen DF, as illustrated in FIG. 5.

When issuing an intent from the Android (registered trademark) Framework to the application 113, for example, the startup control unit 115 starts the application 113 by putExtrea ( ), to which the application orientation ID is added, corresponding to the setting information on the screen display orientation in the display-orientation setting storage unit 41.

The application 113 calls SetRequestOrientation ( ), for example, at the timing of onCreate to change the screen display orientation.

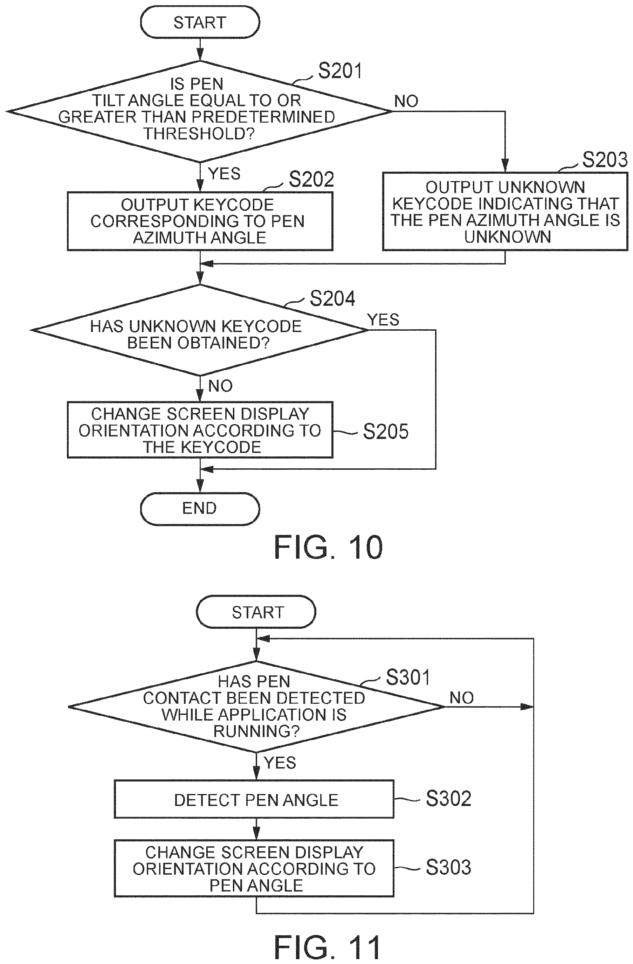

Referring now to FIG. 10, the following describes the details of the conversion process of pen angles to custom keycodes in the present embodiment.

FIG. 10 is a flowchart describing an example of the conversion process of a pen angle of the tablet terminal 1 to a custom keycode according to the present embodiment.

As described in FIG. 10, the input control unit 111 determines whether or not the tilt angle of the pen is equal to or greater than a predetermined threshold (step S201). The input control unit 111 obtains the pen angle from the pen-angle detection unit 220 and determines whether the tilt angle θ2 of the pen angles is equal to or greater than the predetermined threshold (e.g., equal to or greater than the threshold θth). When the tilt angle θ2 is equal to or greater than the threshold θth (step S201: YES), the input control unit 111 advances the process to step S202. When the tilt angle θ2 is smaller than the threshold θth (step S201: NO), the input control unit 111 advances the process to step S203.

In step S202, the input control unit 111 outputs the keycode corresponding to the pen azimuth angle. In one example, the input control unit 111 determines which of the four angular sections illustrated in FIG. 5 the azimuth angle θ1 of the pen falls within, and converts the pen angle into the custom keycode corresponding to the angular section. For example, when the azimuth angle θ1 is in the angular section of area A1, the input control unit 111 converts it into a custom keycode of "0xC4" as in FIG. 7. The input control unit 111 outputs the converted custom keycode. For example, the input control unit 111 outputs the converted custom keycode to the Android (registered trademark) Framework. Following step S202, the input control unit 111 advances the process to step S204.

In step S203, the input control unit 111 outputs an unknown keycode indicating that the azimuth angle θ1 is unknown. Specifically, when the tilt angle θ2 is smaller than the threshold θth, the input control unit 111 converts it into the custom keycode of "0xC3" for outputting as in FIG. 7. Following step S203, the input control unit 111 advances the process to step S204.

In step S204, the display control unit 112 determines whether or not the unknown keycode has been obtained. Specifically, the display control unit 112 obtains the custom keycode output from the input control unit 111 and determines whether or not the obtained custom key code is the unknown keycode ("0xC3"). When the obtained custom keycode is the unknown keycode ("0xC3") (step S204: YES), the display control unit 112 ends the process and does not change the screen display orientation. When the screen display orientation is not changed, the display control unit 112 displays the screen according to the screen display orientation stored in the display-orientation setting storage unit 41.

When the obtained custom key code is not the unknown keycode ("0xC3") (step S204: NO), the display control unit 112 advances the process to step S205.

In step S205, the display control unit 112 changes the screen display orientation according to the keycode. The display control unit 112 stores the setting information on the screen display orientation corresponding to the obtained custom keycode in the display-orientation setting storage unit 41 via Framework, and changes the screen display orientation.

As described above, the tablet terminal 1 (information processing device) according to the present embodiment includes the display unit 21, the touch sensor unit 22, the pen-angle detection unit (angle detection unit), and the display control unit 112. The touch sensor unit 22 detects the contact position of the pen on the screen of the display unit 21. The pen-angle detection unit 220 detects the pen angle, which is the angle of the pen (e.g., electronic pen 30) coming in contact with the screen. The display control unit 112 changes the screen display orientation of the display unit 21 according to the pen angle detected by the pen-angle detection unit 220.

With this configuration, the tablet terminal 1 according to the present embodiment changes the screen display orientation so that the user can view the display correctly when the user places the display screen horizontally for use, for example. Thus, the tablet terminal 1 according to this embodiment improves the user's convenience.

In the present embodiment, the pen angle includes the azimuth angle θ1 on the screen. The display control unit 112 changes the screen display orientation of the display unit 21 according to which of the angular sections (areas A1 to A4), which are four divided sections of the entire angle range, the azimuth angle θ1 falls within.

This allows the tablet terminal 1 according to this embodiment to rotate the display to the screen display orientations in the four directions according to the azimuth angle θ1 of the electronic pen 30 for appropriate change.

The tablet terminal 1 according to the present embodiment includes the input control unit 111 that outputs the information to set the screen display orientation in the form of a keycode (custom keycode) according to the pen angle detected by the pen-angle detection unit 220. The display control unit 112 changes the screen display orientation of the display unit 21 based on the information to set the screen display orientation that the input control unit 111 outputs.

This allows the tablet terminal 1 according to this embodiment to transmit the pen angle via a keycode (custom keycode), and thus change the screen display orientation appropriately using the existing configuration and system without changing them significantly.

In the present embodiment, the pen angle includes the tilt angle θ2 of the pen relative to the direction perpendicular to the screen of the display unit 21. When the tilt angle θ2 is smaller than the predetermined threshold θth, the input control unit 111 outputs information indicating that the azimuth angle θ1 is unknown in the form of a key code (custom keycode "0xC3"). When acquiring information indicating that the azimuth angle θ1 is unknown from the input control unit 111, the display control unit 112 does not change the screen display orientation of the display unit 21.

This allows the tablet terminal 1 according to this embodiment to exclude the case in which the user holds the electronic pen 30 improperly as shown in FIG. 6B, from the process of changing the screen display orientation, for example. The tablet terminal 1 according to this embodiment therefore changes the screen display orientation more appropriately.

The tablet terminal 1 according to this embodiment includes the dominant-hand setting storage unit 42 (dominant-hand information storage unit) that stores dominant-hand information indicating the dominant hand of the user. The display control unit 112 changes the screen display orientation of the display unit 21 according to the angular section corrected based on the dominant-hand information stored in the dominant-hand setting storage unit 42.

This allows the tablet terminal 1 according to this embodiment to properly correct the angular section according to the dominant hand, even when the pen angle differs due to differences in dominant hand. The present embodiment therefore changes the screen display orientation so that the user can view the display correctly.

The tablet terminal 1 according to the present embodiment includes the startup control unit 115 that starts a predetermined application program when the touch sensor unit 22 detects a contact of the electronic pen 30 with the screen in a display state (e.g., locked screen state) where the display screen of display unit 21 is in the standby state. When the startup control unit 115 starts the predetermined application program from the display state (e.g., locked screen state) where the screen of the display unit 21 is in the standby state, the display control unit 112 changes the screen display orientation of the display unit 21 according to the pen angle.

When the user places the tablet terminal 1 according to the present embodiment horizontally for use, this configuration allows the tablet terminal 1 to start the predetermined application program in response to a touch of the electronic pen 30 with the touch sensor unit 22 while changing the screen display orientation from the display state indicating the standby state (e.g., locked screen state) to the orientation such that the user can correctly view the display.

In the present embodiment, the predetermined application program is an instant memo program that initiates a memo function to display the movement locus of the contact position of the electronic pen 30 on the screen upon the contact of the electronic pen 30 with the screen from the display state (e.g., locked screen state) where the display screen of the display unit 21 is in the standby state.

With this configuration, the tablet terminal 1 according to the present embodiment starts the instant memo, for example, while changing the screen display orientation appropriately from the locked screen state in the orientation such that the user can view the display correctly. This allows the user to use the instant memo function quickly and appropriately, so that the tablet terminal 1 according to the present embodiment improves the user's convenience.

The control method according to this embodiment is to control the tablet terminal 1 including the display unit 21 and the touch sensor unit 22 that detects a contact position of the electronic pen 30 on the screen of the display unit 21. The method includes an angle detection step and a display control step. In the angle detection step, the pen-angle detection unit 220 detects the pen angle, which is the angle of the electronic pen 30 when the pen 30 comes in contact with the screen. In the display control step, the display control unit 112 changes the screen display orientation of the display unit 21 according to the pen angle detected at the angle detection step.

The control method of the present embodiment has the same advantageous effects as those from the tablet terminal 1 as stated above, and changes the screen display orientation so that the user can view the display correctly when the user places the screen of the tablet terminal horizontally.

The tablet terminal 1 (information processing device) according to this embodiment may be embodied as follows. The tablet terminal 1 (information processing device) according to this embodiment includes: the display unit 21; the touch sensor unit 22 that detects a contact position of the electronic pen 30 on the screen of the display unit 21; the pen-angle detection unit 220 that detects the angle of the electronic pen 30 when the electronic pen 30 comes in contact with the screen; the main memory 12 (memory) that temporarily stores a program; and the processor 11 that executes the program stored in the main memory 12. The processor 11 executes a display control process of changing the screen display orientation of the display unit 21 according to the pen angle detected by the pen-angle detection unit 220.

With this configuration, the tablet terminal 1 according to the present embodiment has the same advantageous effects as those from the tablet terminal 1 as stated above, and changes the screen display orientation so that the user can view the display correctly when the user places the screen of the tablet terminal horizontally.

### [Second embodiment]

Next, the following describes a tablet terminal 1 according to a second embodiment with reference to the drawings.

The first embodiment describes the example of changing the screen display orientation according to the pen angle when starting a predetermined application program (e.g., instant memo). The present invention is not limited to this. The following embodiment describes an example of changing the screen display orientation according to the pen angle when a predetermined application program (e.g., the program for instant memo) is executed (is running).

The hardware and functional configurations of the tablet terminal 1 in this embodiment are the same as the first embodiment illustrated in FIGS. 2 and 3, so the description on them is omitted in the following.

The display control unit 112 in the present embodiment changes the screen display orientation of the display unit 21 according to the pen angle while a predetermined application program is running.

FIG. 11 is a flowchart describing an example of the process of changing the screen display orientation of the tablet terminal 1 according to the present embodiment.

As described in FIG. 11, the tablet terminal 1 determines whether or not a pen contact has been detected while a predetermined application program (e.g., instant memo program or Notepad) is running (step S301). The touch sensor unit 22 of the tablet terminal 1 determines whether or not the electronic pen 30 comes in contact with (touches) the display screen DF (e.g., the window of the predetermined application program). When the electronic pen 30 comes in contact with (touches) the display screen DF (e.g., the window of the predetermined application program) (step S301: YES), the process shifts to step S302. When the electronic pen 30 does not come in contact with (touches) the display screen DF (e.g., the window of the predetermined application program) (step S301: NO), the process returns to step S301.

In step S302, the pen-angle detection unit 220 of the touch sensor unit 22 detects the pen angle. The pen-angle detection unit 220 detects the pen angle (azimuth angle θ1 and tilt angle θ2) of the electronic pen 30 in contact with the display screen DF using electromagnetic induction with the resonant circuit LC1 of the electronic pen 30.

Next, the display control unit 112 changes the screen display orientation according to the pen angle (step S303). In this step, the input control unit 111 acquires the pen angle (azimuth angle θ1 and tilt angle θ2) detected by the pen-angle detection unit 220 first, and changes it into a custom keycode according to which of the angular sections (area A1 to area A4) the azimuth angle θ1 falls within. The display control unit 112 changes the screen display orientation based on the custom keycode corresponding to the angular section output from the input control unit 111 (see, for example, FIG. 7).

The tablet terminal 1 according to the present embodiment may execute both the process of changing the screen display orientation in FIG. 11 and the process of changing the screen display orientation of the first embodiment described in FIG. 9.

As described above, in the tablet terminal 1 according to the present embodiment, the display control unit 112 changes the screen display orientation of the display unit 21 according to the pen angle while a predetermined application program is running, for example.

With this configuration, the tablet terminal 1 according to the present embodiment changes the screen display orientation appropriately while a predetermined application program is running even when the user places the display screen horizontally for use and views the screen from various directions. Thus, the tablet terminal 1 according to this embodiment improves the user's convenience.

The present invention is not limited to the above-described embodiments, and can be modified without deviating from the scope of the present invention.

For example, the above embodiments describe the example where the information processing device is the tablet terminal 1, and the present invention is not limited to this example. The information processing device may be other devices, such as a smartphone, and a laptop personal computer (PC) being operable in a tablet mode.

The above embodiments describe the example where Android (registered trademark) is used as one example of the OS. The present invention is not limited to this. Other OSs such as iOS (registered trademark) may be used.

The above embodiments describe the example where the display control unit 112 acquires a custom keycode converted by the input control unit 111 from the pen angle, and uses the keycode instead of the pen angle. The present invention is not limited to this. The display control unit 112 may acquire the pen angle detected by the pen-angle detection unit 220, and use the pen angle. The custom keycode is not limited to the example in FIG. 7, and may be another keycode.

The tablet terminal 1 according to the above embodiments may execute both the process of changing the screen display orientation using sensors such as an acceleration sensor that is the peripheral device 23 and the process of changing the screen display orientation based on the pen angle.

The above embodiments describe the example of the pen-angle detection unit 220 detecting the pen angle based on the electromagnetic induction with the resonant circuit LC1 of the electronic pen 30. The present invention is not limited to this. The pen-angle detection unit 220 may detect the pen angle by another method.

The above embodiments describe the example of the tablet terminal 1 which corrects the pen angle according to the dominant hand. The present invention is not limited to this example. In another embodiment, the tablet terminal 1 may perform no corrections. For correction, the tablet terminal 1 (input control unit 111) may adjust or set the correction amount.

The above-stated configurations of the tablet terminal 1 internally include a computer system. A program to implement the functions of various configurations of the tablet terminal 1 as stated above may be stored in a computer-readable recording medium, and the processing at the various configurations of the tablet terminal 1 may be performed by causing the computer system to read and execute the program stored in this recording medium. "Causing the computer system to read and execute the program stored in the recording medium" includes installing of such a program in the computer system. The "computer system" here includes an OS and hardware, such as peripherals.

The "computer system" may include a plurality of computer devices connected via a network, including the internet and communication lines such as WAN, LAN and dedicated lines. The "computer readable recording medium" is a portable medium, such as flexible disk, a magnetooptical disc, a ROM, or a CD-ROM, as well as a memory internally stored in the computer system, such as hard disk. In this way, the recording medium to store the program may be a non-transient recording medium, such as a CD-ROM.

The recording medium also includes an internal or external recording medium where a distribution server can access to distribute the program. The program may be divided into a plurality of pieces. After these pieces of program may be downloaded at different timings, they may be combined by the configurations of the tablet terminal 1. Alternatively, different distribution servers may distribute these divided pieces of program. The "computer readable recording medium" also includes the one that can hold a program for a certain period of time, as in a server that receives a program transmitted via a network or a volatile memory (RAM) in the computer system as the client. The program may implement a part of the functions as stated above. The program may be a differential file (differential program) that can implement the above functions by combining it with a program which is already stored in the computer system.

A part or all of the functions as stated above may be implemented as an integrated circuit, such as a LSI (Large Scale Integration). Each of the functions as stated above may be implemented as one processor, or a part or all of the functions may be implemented as one processor in an integrated manner. A technique for integrated circuit is not limited to a LSI, and an integrated circuit may be realized using a dedicated circuit or a general-purpose processor. If a technique for integrated circuit that replaces LSIs becomes available with the development of semiconductor techniques, an integrated circuit based on such a technique may be used.

### [Description of Symbols]

- 1: tablet terminal
- 10: control unit
- 11: processor
- 12: main memory
- 13: flash memory
- 20: touch screen
- 21: display unit
- 22: touch sensor
- 23: peripheral device
- 24: audio system
- 25: microphone
- 26: speaker
- 27: baseband chip
- 28: wireless unit
- 30: electronic pen
- 111: input control unit
- 112: display control unit
- 113: application
- 114: setting unit
- 115: startup control unit
- 220: pen-angle detection unit
- 221: contact detection unit
- 222: electronic-pen detection unit
- LC1: resonant circuit

## Claims

1. An information processing device comprising:
a display with a screen;
a touch sensor which detects a contact position of a pen on the screen of the display;
an angle detection unit which detects a pen angle, which is the angle of the pen when the pen comes in contact with the screen; and
a display control unit which changes screen display orientation of the display according to the pen angle detected by the angle detection unit.

2. The information processing device according to claim 1, wherein the pen angle includes an azimuth angle on the screen, and
the display control unit changes the screen display orientation of the display according to which of four divided angular sections of an entire angle range the azimuth angle falls within.

3. The information processing device according to claim 2, further comprising an input control unit which outputs information for setting the screen display orientation based on the pen angle detected by the angle detection unit, the information being in the form a keycode, and
the display control unit changes the screen display orientation of the display based on the information for setting the screen display orientation that the input control unit outputs.

4. The information processing device according to claim 3, wherein the pen angle includes a tilt angle of the pen relative to a direction perpendicular to the screen of the display,
when the tilt angle is smaller than a predetermined threshold, the input control unit outputs information in the form of a keycode, indicating that the azimuth angle is unknown, and
when acquiring information from the input control unit, indicating that the azimuth angle is unknown, the display control unit does not change the screen display orientation of the display.

5. The information processing device according to any one of claims 2 to 4, further comprising a dominant-hand information storage unit that stores dominant-hand information indicating a dominant hand of a user, wherein
the display control unit changes the screen display orientation of the display according to the angular section that is corrected based on the dominant-hand information stored in the dominant-hand information storage unit.

6. The information processing device according to any one of claims 1 to 5, further comprising a startup control unit which starts a predetermined application program in response to detection by the touch sensor of a contact of the pen with the screen in a display state indicating a standby state, wherein
when the startup control unit starts the predetermined application program from a display state where the screen of the display is in the standby state, the display control unit changes the screen display orientation of the display according to the pen angle.

7. The information processing device according to claim 6, wherein the predetermined application program is an instant memo program that initiates a memo function to display a movement locus of a contact position of the pen on the screen upon the contact of the pen with the screen from the display state where the screen of the display is in the standby state.

8. The information processing device according to claim 1, wherein the display control unit changes the screen display orientation of the display according to the pen angle while a predetermined application program is running.

9. A method for controlling an information processing device including a display with a screen, and a touch sensor which detects a contact position of a pen on the screen of the display, the method comprising the steps of:
an angle detection step where an angle detection unit detects a pen angle, which is the angle of the pen when the pen comes in contact with the screen; and
a display control step where a display control unit changes screen display orientation of the display according to the pen angle detected at the angle detection step.
